# EUROPEAN PATENT SPECIFICATION

(11) **EP 1 498 628 B1**
(45) Date of publication and mention of the grant of the patent: **06.01.2010**
(21) Application number: 03745705.8
(22) Date of filing: 08.04.2003
(51) Int. Cl.: F16D 13/74, F01M 1/06

(54) **CLUTCH MECHANISM LUBRICATING STRUCTURE OF ENGINE**
KUPPLUNGSMECHANISMUSSCHMIERKONSTRUKTION FÜR MOTOR
STRUCTURE DE LUBRIFICATION DE MECANISME D'EMBRAYAGE DU MOTEUR

(30) Priority: 08.04.2002 JP 2002105023
(43) Date of publication of application: 19.01.2005
(73) Proprietor: Yamaha Hatsudoki Kabushiki Kaisha, Iwata-shi, Shizuoka 438-8501 (JP)
(72) Inventor: OISHI, Akifumi, Iwata-shi, Shizuoka 438-8501 (JP); ISHIDA, Yousuke, Iwata-shi, Shizuoka 438-8501 (JP)
(74) Representative: Grünecker, Kinkeldey, Stockmair & Schwanhäusser Anwaltssozietät
(86) International application number: PCT/JP2003/004466
(87) International publication number: WO 2003/085278

(56) References cited:
- JP-A- 3 244 831
- JP-A- 4 271 987
- JP-A- 8 121 497
- JP-A- 10 315 806
- JP-A- 51 092 949
- JP-A- 59 222 625
- JP-A- 60 004 626
- PATENT ABSTRACTS OF JAPAN vol. 007, no. 269 (M-259), 30 November 1983 (1983-11-30) & JP 58 148211 A (HONDA GIKEN KOGYO KK), 3 September 1983 (1983-09-03)
- PATENT ABSTRACTS OF JAPAN vol. 2000, no. 16, 8 May 2001 (2001-05-08) & JP 2001 003723 A (YAMAHA MOTOR CO LTD), 9 January 2001 (2001-01-09)

## Description

The invention relates to an engine with a clutch mechanism according to the preamble of claim 1, cf. JP-A-58-148 211. Further, the invention relates to a vehicle, in particular a motorcycle.

An engine, such as a motorcycle engine, for example, is generally provided with a clutch mechanism for transmitting or cutting off the transmission of the rotation of a crankshaft to an output shaft.

JP-A-2001-003723 discloses a type of clutch mechanism being an automatic centrifugal clutch mechanism in which a cup-shape outer clutch with an axial end open is fixed to the output side of a rotational shaft, and an input member is located in the outer clutch and fixed to the input side thereof.

Another conventional type of clutch mechanism is disclosed in JP-B-H06-065894 being a wet type, multi-plate clutch mechanism in which a plurality of inner and outer clutch plates are interposed between an outer clutch fixed to the input side of a rotational shaft, and an inner clutch fixed to the output side thereof.

Meanwhile, in the foregoing clutch mechanisms, it is necessary to supply lubricant oil between the outer clutch and the input member or between the inner and the outer clutch plates in order to prevent those components from being seized by heat.

While neither document discloses a special structure for securely lubricating the clutch mechanism, it is assumed that the clutch mechanism is lubricated in such a conventional manner that the mechanism itself splashes lubricant oil onto its components that stays in the bottom portion of a crankcase and the like.

Besides, a conventional clutch mechanism lubricating structure is known, wherein the lubricant oil is under pressure by a lubricant oil pump and supplied to the clutch mechanism. Although the clutch mechanism can be securely lubricated in this way, there arises a problem that the lubricant oil pump may increase the size of the engine or that the overall structure of the lubricating system may become complex.

It is, therefore, an object of the invention to provide an improved engine having a clutch mechanism lubricating structure capable of obtaining sufficient lubrication performance with a simplified lubricant oil supply structure.

It is further an object of the invention to provide a vehicle, in particular a motorcycle, having an improved engine.

For an engine of the above kind, this object is solved in an inventive manner by comprising the characterising features of present claim 1.

Preferably, at least part of the clutch mechanism is located in an area over which the lubricant oil is spread from the connecting portion of the connecting rod and the crankpin.

Further, preferably the clutch mechanism has a bowl-shaped outer clutch which comprises an open end at an axial end side thereof, and wherein the open end of the outer clutch is directed to or located within a lubricating oil splashing area.

According to one embodiment, the clutch mechanism is a multi-plate clutch wherein an inner clutch is coaxially disposed in the outer clutch, one of the inner and outer clutches being connected to an input side of the rotational shaft and the other to an output side thereof, and wherein a plurality of inner and outer clutch plates are interposed between the inner and outer clutches.

According to a further embodiment, the clutch mechanism is an automatic centrifugal clutch, wherein an input member is disposed in the outer clutch, the input member being configured to be rotated by virtue of a centrifugal force and thereby to come into abutment with an inner surface of the outer clutch, and wherein the input member and the outer clutch are connected to the input side and the output side of the rotational shaft, respectively.

More preferably, a plurality of slits are formed in an outer circumferential wall of the outer clutch in such a manner as to pass therethrough to an interior of the outer clutch, and wherein the slits are made to open in a direction in which the lubricating oil splashes.

It is further preferred that the clutch mechanism is disposed in a clutch chamber separated from a crank chamber which accommodates therein the connecting portion and the crank arms, and wherein an introduction opening is provided between the two chambers for allowing the splashing lubricating oil to enter the clutch chamber.

Therein, preferably the introduction opening is formed in such a manner as to expand between areas on both sides of a plane including both rotational shaft and the crankshaft.

According to a still further preferred embodiment, a guide portion is provided adapted to receive the splashing lubricating oil and to guide more of lubricating oil so received to an inside of the clutch mechanism than to an outside thereof.

More preferably, the guide portion comprises a lubricating receiving portion disposed in such a manner as to face the splashing lubricating oil to receive the splashing lubricating oil and a sub-guiding portion which extends from the lubricating oil receiving portion to an interior of the outer clutch configured to guide lubricating oil received by the lubricating oil receiving portion to the interior of the outer clutch.

A further preferred embodiment provides that a drive-side pulley of a dry V-belt continuously variable transmission is mounted on a first end of the crankshaft and in that an oil supply hole extends from a second end of the crankshaft to communicate with the connecting portion for providing a supply of lubricating oil to the connecting portion and further to a lubricating splashing area.

More preferably, an output gear is disposed in the vicinity of the open end of the outer clutch and in that the open end and the output gear are located within the lubricating oil splashing area.

Since lubricant oil supplied to the connecting portion of a crankpin and a (big) end of a connecting rod is led to a clutch mechanism, it is possible to supply a large amount of lubricant oil that is spread from the connecting portion by oil feeding pressure of the lubricant oil itself supplied to the connecting portion or by centrifugal force. The clutch mechanism can thus be prevented from being seized by heat without employing a special lubricant oil supply structure.

Since, preferably at least part of the clutch mechanism is located in the area over which the lubricant oil is spread from the connecting portion, it is possible to securely lead the spread lubricant oil into the clutch mechanism.

Further, since preferably the clutch mechanism is located so that the opening of an outer clutch is directed to the lubricant oil spreading area, it is possible to securely lead the spread lubricant oil into the clutch mechanism through the opening of the outer clutch.

Since, preferably a plurality of slits formed in the peripheral wall of the outer clutch to pass through the inside are directed and opened in the lubricant oil spreading direction, it is possible to more securely lead the lubricant oil into the clutch mechanism.

Since, according to an embodiment, the clutch mechanism is located in a clutch chamber separated from a crank chamber and a lead-in opening for permitting the entry of the lubricant oil is formed in a partition wall of the clutch chamber and the crank chamber, and/or since the lead-in opening is directed to the lubricant oil spreading direction and made sufficiently large enough, it is possible to lead the lubricant oil from the crank chamber into the clutch chamber through the lead-in opening, so that the clutch mechanism can be lubricated with such a simple structure while received in the clutch chamber.

Moreover, preferably the spread lubricant oil is received and led to the inside of the clutch mechanism. Therefore, it is possible to more securely supply the lubricant oil led to the inside to the portions between outer and inner clutch plates or to the portion between an input member and the outer clutch by centrifugal force, so that those components can be prevented from being seized by heat.

For a vehicle, in particular a motorcycle, the above object is solved in an inventive manner in that the vehicle comprises an engine according to at least one of the claims 1 to 12.

Further preferred embodiments are subject to the subclaims.

In the following, the invention will be described in greater detail by means of preferred embodiments thereof with reference to the attached drawings, wherein:

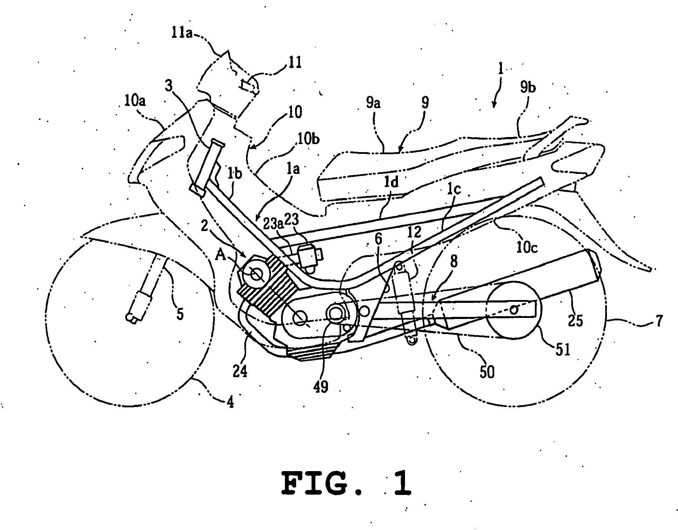

- FIG. 1: is a left side view of a motorcycle employing a clutch mechanism lubricating structure for an engine according to an embodiment of the invention;

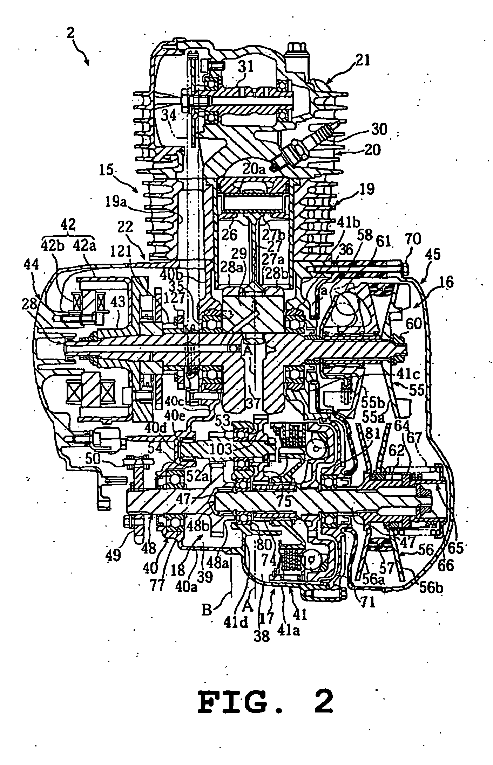

- FIG. 2: is a sectional plan view extended along the line II-II in FIG. 6 of the above engine;
- FIG. 3: is a sectional plan view of the CVT mechanism and the centrifugal clutch mechanism portion of the above engine;
- FIG. 4: is a right side view of the above engine;
- FIG. 5: is a left side view of the above engine;
- FIG. 6: is a right side view of the above engine with the CVT mechanism and the centrifugal clutch mechanism removed;
- FIG. 7: is a right side view of the crankcase of the above engine;

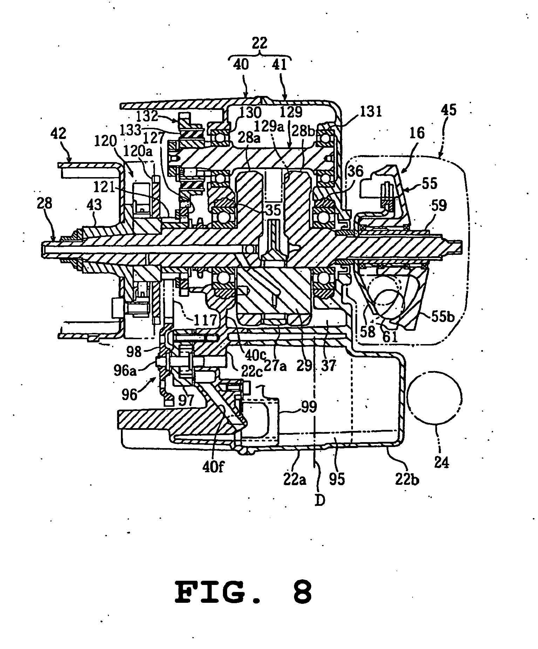

- Fig. 8: is a sectional rear view along the line VIII-VIII in FIG. 5 of the above crankcase;
- FIG. 9: is a sectional rear view of the kick mechanism of the above engine as seen along the line IX-IX in FIG. 5;
- FIG. 10: is a sectional view of the above kick mechanism;
- FIG. 11: is a sectional rear view showing the lubricant oil path of the above engine;
- FIG. 12: is a sectional view of the above centrifugal clutch mechanism;
- FIG. 13: is a side view of the outer clutch of the above centrifugal clutch mechanism;
- FIG. 14: is a front view of the above centrifugal clutch mechanism;
- FIG. 15: is an enlarged sectional view of an essential part of the above centrifugal clutch mechanism;
- FIG. 16: is an enlarged sectional view of an essential part of the above centrifugal clutch mechanism; and
- FIG. 17: is a sectional view of the conventional driven pulley generally in use;

The embodiments of the present invention will be hereinafter described in reference to the appended drawings. Incidentally, the terms "right" and "left" as used herein are meant as seen from the rider seated on the seat.

To roughly describe the constitution of a motorcycle 1 shown in the drawings, an engine 2 of this embodiment is mounted on the motorcycle 1, a head pipe 3 is secured to the front end of a vehicle body frame 1 a to support a front fork 5 that is capable of turning right and left about its axis and supports a front wheel 4 with a shaft, a rear arm bracket 6 secured to the central part of the vehicle body frame 1 a to support a rear arm 8 which supports a rear wheel 7 with a shaft for up and down swinging, and a seat 9 made up of a front rider's seat 9a and a rear rider's seat 9b is mounted on the vehicle body frame 1a.

The vehicle body frame 1a is made up of right and left down tubes 1b extending from the head pipe 3 obliquely rear downward, right and left upper tubes 1 c extending from the rear ends of the down tubes 1 b obliquely rear upward, and right and left seat rails 1 d extending in the longitudinal direction of the vehicle to interconnect the down tubes 1b and upper tubes 1 c. The vehicle body frame 1 a is surrounded with a resinous vehicle body cover 10 made up of a front cover 10a, a leg shield 10b, and a side cover 10c.

Steering handlebars 11 are secured to the upper end of the front fork 5 and surrounded with a handlebars cover 11a. A rear damper 12 is suspended between the rear arm 8 and the rear arm bracket 6.

The engine 2 is an air-cooled, four-stroke, single cylinder engine and suspension-supported between rear lower parts of the down tubes 1b, with its cylinder axis A tilted forward by about 45 degrees. The engine 2 comprises an engine unit 15, a V-belt type of CVT 16, a wet type, multi-plate, centrifugal clutch mechanism 17, and a reduction gear mechanism 18.

The engine unit 15, in rough description, is constituted with a cylinder block 19, a cylinder head 20 placed on the top mating surface of the cylinder block 19, a head cover 21 placed over the cylinder head 20, and a crankcase 22 attached to the bottom mating surface of the cylinder block 19 to house a crankshaft 28.

The rear surface of the cylinder head 20 is provided with an intake port 20b connected to a combustion recess 20a. The intake port 20b is connected through an intake pipe 23a to a carburetor 23. The front surface of the cylinder head 20 is provided with an exhaust port 20c connected to the combustion recess 20a. An exhaust pipe 24 is connected to the exhaust port 20c. The exhaust pipe 24 extends obliquely toward the right lower side of the engine, along under the transmission case 45 (to be described later) and the right side of a swelled portion 22b of a lubricant oil chamber, and obliquely rearward along the vehicle body and is connected to a muffler 25 disposed on the right side of the rear wheel 7. Into the combustion recess 20a is inserted an ignition plug 30.

The cylinder block 19 has a chain chamber 19a formed on the left side and interconnecting the interior of the crankcase 22 and the interior of the cylinder head 20. A timing chain 34 placed in the chain chamber 19a drives a camshaft 31 that drives to open and close an intake valve 32 and an exhaust valve 33 with the crankshaft 28.

In the cylinder bore of the cylinder block 19 is inserted a piston 26 for free sliding therein. The piston 26 is connected to the small end 27b of a connecting rod 27. The connecting rod 27, at its big end 27a, is connected to a crankpin 29 fitted between right and left crank arms 28a and 28b of the crankshaft 28.

A transmission shaft 47 is placed behind and parallel to the crankshaft 28. An output shaft 48 is placed coaxially and to the left of the transmission shaft 47. The output shaft 48, at its left end, is provided with a drive sprocket 49 associated through a chain 50 with a driven sprocket 51 on the rear wheel 7.

A generator 42 is attached to the left end of the crankshaft 28. The generator 42 is constituted with a sleeve 43 taper-fitted onto the crankshaft 28, a rotor 42a secured to the sleeve 43, and a stator 42b secured, in a position radially opposite the rotor 42a, to the generator case 44.

The crankcase 22 is split into the first case 40 on the left side in the crankshaft direction and the second case 41 on the right side. The generator case 44 for housing the generator 42 is removably attached to the outer side, in the crankshaft direction, of the first case 40. The transmission case 45 serving to house the CULT 16 is attached to the outer side, in the crankshaft direction, of the second case 41.

The parting line (B) of the first and second cases 40 and 41 is slightly displaced to the left of the cylinder axis (A). The first and second cases 40 and 41 are constituted, in rough description, with first and second peripheral walls 40a and 41a that are generally open toward outside in the crankshaft direction, on the inner side of which are integrally formed first and second support walls 40b and 41 b that support the crankshaft 28.

The first support wall 40b of the first case 40 has a first crank support wall portion 40c for supporting, through a left side journal bearing 35, the left crank journal portion 28c of the crankshaft 28, and a reduction gear mechanism support wall portion 40d formed to project in a stepped manner to the left in the crankshaft direction relative to the first crank support wall portion 40c.

The second support wall 41 b of the second case 41 has a second crank support wall portion 41 c for supporting the right crank journal portion 28d of the crankshaft 28 through a right side journal bearing 36, and a clutch support wall portion 41 d formed to project in a stepped manner to the left in the crankshaft direction relative to the second crank support wall portion 41 c.

The crank arms 28a, 28b, and the crank pin 29 of the crankshaft 28 are housed in the crank chamber 37 formed with the first and second crank support wall portions 40c and 41c.

The wet type, multi-plate, centrifugal clutch mechanism 17 is housed in a clutch chamber 38 formed with the second peripheral wall 41 a and the clutch support wall portion 41 d. The clutch chamber 38 is separated from the crank chamber 37.

A reduction chamber 39 is formed with the reduction gear mechanism support wall portion 40d and the clutch support wall portion 41d to house the reduction gear mechanism 18, and communicates with the crank chamber 37.

The reduction gear mechanism 18 has a reduction shaft 52 provided parallel to the transmission shaft 47 between the support wall portions 40d and 41d. The right side portion of the reduction shaft 52 is supported through a reduction shaft bearing 53 with the clutch support wall portion 41d while its left side portion is supported through a reduction shaft bearing 54 with a recess 40e formed in the reduction gear mechanism support wall portion 40d. A primary reduction small gear 74 capable of making relative rotation is attached to the transmission shaft 47 placed in the clutch chamber 38. A primary reduction large gear 75 engaging with the primary reduction small gear 74 is secured with a key to the reduction shaft 52. The reduction shaft 52 located in the reduction chamber 39 is integrally formed with a secondary reduction small gear 52a. A secondary reduction large gear 48a engaging with the secondary reduction small gear 52a is integrally formed with the output shaft 48.

The output shaft 48 is placed coaxially with the transmission shaft 47. The right end portion of the output shaft 48 is disposed with a support hole 48b in a depressed manner into which the left end portion of the transmission shaft 47 is to be inserted. The right end portion of the output shaft 48 is supported with the left end portion of the transmission shaft 47 through a bearing 76 attached in the support hole 48b. The left end portion of the output shaft 48 is passed through and supported with the reduction gear mechanism support wall portion 40d of the first case 40 through a bearing 77. The drive sprocket 49 is secured to the projecting end portion of the output shaft 48.

The V-belt type CVT 16 is constituted with the drive pulley 55 attached to the right outside end portion of the crankshaft 28, the driven pulley 56 attached to the right outside end of the transmission shaft 47, and the V-belt 57 routed around both the drive pulley 55 and the driven pulley 56 to be connected to each other.

The V-belt 57 is made of resin that is heat resistant and durable. Details of the constitution are as follows. A large number of resin blocks 57a, made of a material such as polyamide resin mixed with carbon fibers or aramid fibers and formed in the shape of H lying on its side, are placed in succession and joined together by fitting pairs of ring-shaped connecting members 57b made of highly heat resistant rubber thereonto.

The drive pulley 55 is made up of a fixed pulley half 55a and a movable pulley half 55b, with the former fixed to the right end portion of the crankshaft 28 while the latter placed on the inner side, in the crankshaft direction, of the fixed pulley half 55a, arranged to be axially slidable and rotatable together with the crankshaft 28 through a slide collar 59. A cam plate 58 and the slide collar 59 are spline-fitted onto the right end portion of the crankshaft 28, on the axially outer side of which is attached the fixed pulley half 55a and secured by means of a locking nut 60. Cylindrical weights 61 are placed between the movable pulley half 55b and the cam plate 58. As the crankshaft 28 rotates faster, the weights 61 move radially outward by centrifugal force to move the movable pulley half 55b axially outward and increase the routing radius of the pulley. As a result, reduction ratio decreases.

The driven pulley 56 is made up of a fixed pulley half 56a and a movable pulley half 56b, with the former fixed to the right outside end portion of the transmission shaft 47 while the latter placed on the outer side, in the crankshaft direction, of the fixed pulley half 56a, to be axially slidable. A cylindrical slide collar 62 secured to the axially central portion of the fixed pulley half 56a is spline-fitted onto the transmission shaft 47. A cylindrical boss member 63 secured to the axially central portion of the movable pulley half 56b is fitted, to be axially movable, onto the slide collar 62. Guide pins 64 planted into the slide collar 62 engage with slide grooves 63a formed in the boss member 63 so that the guide pins 64 can slide and the movable pulley half 56b can rotate together with the fixed pulley half 56a.

At the fore-end portion of the slide collar 62 is attached a spring receiving member 65 of an annular plate shape by means of a retaining ring 65a. A coil spring 67 for constantly urging the movable pulley half 56b toward the fixed pulley half 56a is interposed between the spring receiving member 65 and the movable pulley half 56b.

The driven pulley 56 is pushed into a position recessed from the fore-end portion 62a of the slide collar 62 and secured to the transmission shaft 47 by means of a locking nut 66 screwed to the fore-end 47a of the transmission shaft 47.

Here, the inside diameter of the slide collar 62 is stepped to a diameter larger than the outside diameter of the transmission shaft 47, and the fore-end portion 47a of the transmission shaft 47 is stepped to a smaller diameter. The locking nut 66 and the washer 66a can be placed smoothly in a position sunk in the slide collar 62. In this way, it is possible to place the locking nut 66 in a position recessed in the crankshaft direction from the spring receiving member 65 for the coil spring 67.

Since this embodiment is arranged that the movable pulley half 56b of the driven pulley 56 attached to the transmission shaft 47 is located on the outer side in the crankshaft direction of the fixed pulley half 56a, it is possible to secure a free space on the inner side of the driven pulley 56 of the transmission shaft 47 and use the space for placing the centrifugal clutch mechanism 17 adjacent to the fixed pulley half 56a. This makes it possible to coaxially place the output shaft 48 on part of the transmission shaft 47 located on the opposite side of the driven pulley 56 without increasing the engine width.

As a result, unlike the conventional arrangement of placing the output shaft behind the transmission shaft, the engine size can be reduced in the longitudinal direction of the vehicle.

Since this embodiment is arranged that the locking nut 66 is placed in an axially recessed position using the spring receiving member 65 that supports the coil spring 67 for urging the movable pulley half 56b against the fixed pulley half 56a, it is possible to restrict the dimension of the engine from increasing in the vehicle width direction by reducing the amount of protrusion of the coil spring 67 toward the outer side in the transmission shaft direction with a simple constitution while securing necessary length of the coil spring 67.

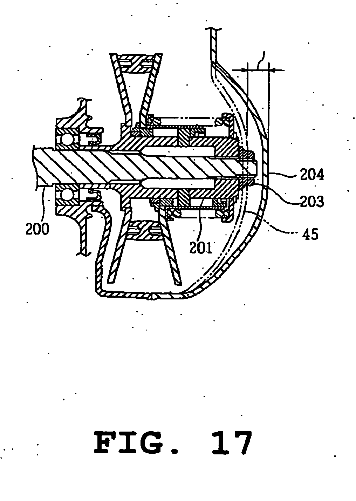

In other words, in a constitution for example shown in FIG. 17 in which a slide collar 201 is secured to a transmission shaft 200 by tightening a locking nut 203 on the outside end surface of the slide collar 201, a transmission case 204 protrudes outward in the vehicle width direction according to the size of the locking nut 203. In contrast to the above, this embodiment is arranged that the locking nut 66 is placed in an axially recessed position from the outside end of the spring receiving member 65, so that the protrusion of the transmission case 45 is reduced by a dimension of (t), about 10 mm.

Since the coil spring 67 is located on the axially outer side, the coil spring 67 can be serviced easily after only removing the retaining ring 65a. If the movable pulley half were placed inside the fixed pulley half, or if the coil spring were placed axially on the inner side, servicing work efficiency would become poor because the entire driven pulley would have to be removed.

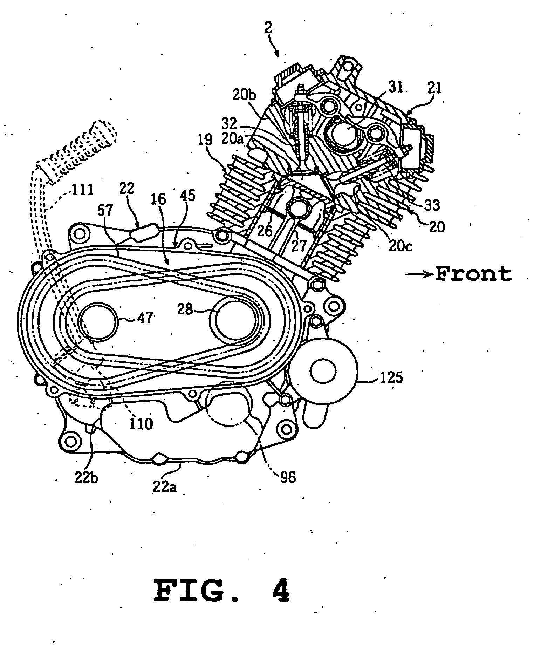

The transmission case 45 is constituted to be generally sealed and formed to be separate from or independent of the crankcase 22 in an elliptic shape as seen from the right (FIG 4) so as to cover most of the upper side of the crankcase 22. The transmission case 45 is constituted with a resinous case 45a of a bottomed box shape that is open toward the outer side in the crankshaft direction, and an aluminum lid 45b that closes the opening in airtight state, and is secured to the second case 41 using bolts 70. Space (a) is provided between the bottom wall 45c of the case 45a and the second case 41, which restricts heat transmission from the engine 2 to the transmission case 45.

On the outer side in the crankshaft direction of the second peripheral wall 41 a forming the clutch chamber 38 is formed an opening 41e of the size that permits the centrifugal clutch mechanism 17 to be put in and taken out. A clutch cover 71 is attached in oil-tight state to the opening 41 e. The clutch cover 71 is removably fixed to the opening edge of the second peripheral wall 41 a by means of bolts 72. **I**n this way, the transmission case 45 can be removed together with the driven pulley 56, and the centrifugal clutch mechanism 17 can be removed together with the transmission shaft 47 after removing the clutch cover 71.

The centrifugal clutch mechanism 17 is positioned and supported to be axially immovable with clutch bearings 80 on one side and 81 on the other side, with the former attached to the axially left end and the latter in the center of the transmission shaft 47. The clutch bearing 80 on one side is supported with the clutch support wall portion 41d. The clutch bearing 81 on the other side is supported with the clutch cover 71.

The clutch support wall portion 41 d that supports the clutch bearing 80 and the reduction shaft bearing 53 is displaced toward the left of the second crank support wall portion 41 c that supports the right hand journal bearing 36. In other words, it is located between the first crank support wall portion 40c that supports the left journal bearing 35 and the second crank support wall portion 41c. More concretely, it is located on the cylinder axis A or slightly displaced from the cylinder axis (A) toward the parting line (B).

The clutch cover 71 that supports the clutch bearing 81 on the other side is located more on the right outer side in the crankshaft direction than the second crank support wall portion 41 b that supports the right journal bearing 36. The reduction gear mechanism support wall portion 40d that supports the left side bearing 77 of the output shaft 48 is located more on the left outer side than the first crank support wall portion 40c that supports the left journal bearing 35.

According to the present embodiment, it is possible to enhance the heat resistance and durability of the belt in comparison with a rubber belt by making the V-belt 57 routed around the drive pulley 55 and the driven pulley 56 with a resin member, so that the V-belt 57 requires no cooling. As a result, the transmission case 45 can be made in a sealed constitution to prevent water and dust from entering inside.

Using the resinous belt 57 with enhanced durability makes it possible to reduce the outside diameters of the drive pulley 55 and the driven pulley 56, and accordingly, the distance between axes of the drive pulley 55 and the driven pulley 56 so that the engine as a whole is made compact.

In this embodiment, the transmission case 45 is made in a sealed constitution separate from or independent of the crankcase 22. Therefore, the space (a) provided between the crankcase 22 and the transmission case 45 blocks engine heat, preventing heat of the engine 2 from being transmitted to the transmission case 45 and restricting temperature rise in the belt chamber. Further, since the case 45a is made of resin which prevents heat transmission, heat of the engine 2 can be restricted from being transmitted to the transmission case 45 in terms thereof.

The crankcase 22 is parted in the crankshaft direction into the first and second cases 40 and 41. The transmission case 45 is placed on the outer side in the crankshaft direction of the second case 41. The centrifugal clutch mechanism 17 is located in the vicinity on the inner side in the crankshaft direction of the transmission case 45. As a result, it is possible to place the output shaft 48 coaxially with the transmission shaft 47 on the opposite side of the CVT 16 to reduce the longitudinal dimension of the engine 2 while restricting its width dimension.

Since the centrifugal clutch mechanism 17 is supported at two points with one and the other clutch bearings 80 and 81, the centrifugal clutch mechanism 17 is positioned in the axial direction and supported with a simple constitution without using separate components.

This embodiment is arranged that the clutch support wall portion 41 d that supports the clutch bearing 80 on one side is placed between the first and second crank support wall portions 40c and 41 c that support the left and right journal bearings 35 and 36 of the crankshaft 28 and the clutch cover 71 that supports the clutch bearing 81 on the other side is located on the outer side in the crankshaft direction of the second crank support wall portion 41 c that supports the right journal bearing 36. Therefore, it is possible to secure the capacity of the clutch chamber 38 while reducing the distance between axes of the crankshaft 28 and the transmission shaft 47 in comparison with an arrangement in which the first crank support wall 40c and the clutch support wall 41 on one side are located on the same line, and the second crank support wall 41 c and the clutch cover 71 are located on the same line, so that the centrifugal clutch mechanism 17 is housed compactly and the engine as a whole is made compact.

Since the clutch cover 71 is removably attached to the opening 41e of the second case 41, the work of maintenance and replacing parts can be made easily because the centrifugal clutch 17 can be removed together with the transmission shaft 47 after the transmission case 45 and the clutch cover 71 are removed.

In this embodiment, the output shaft 48 is located coaxially on the side, opposite the transmission case 45, of the transmission shaft 47, and the drive sprocket 49 is attached to the output shaft 48. Owing to this, it is possible to place coaxially the centrifugal clutch mechanism 17 and the drive sprocket 49 to reduce the engine size in the longitudinal direction of the vehicle.

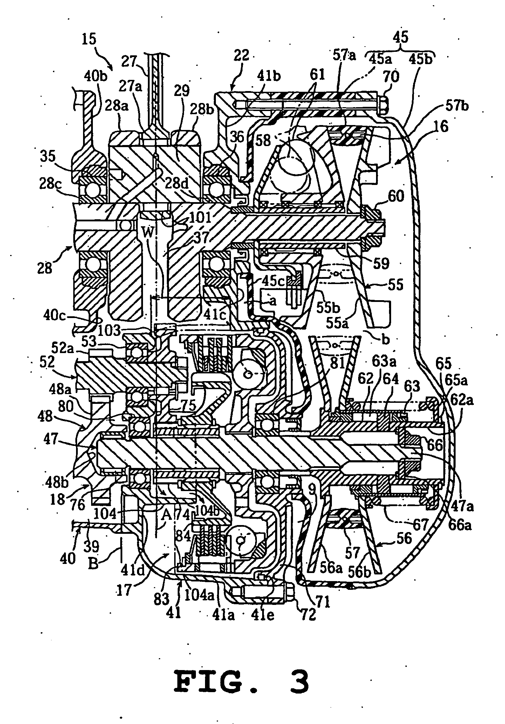

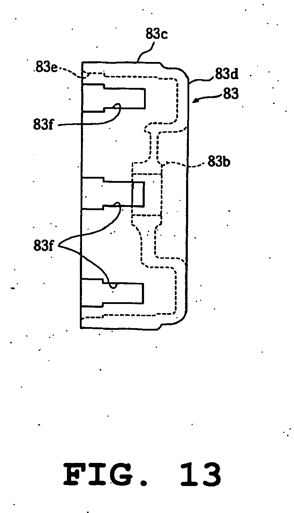

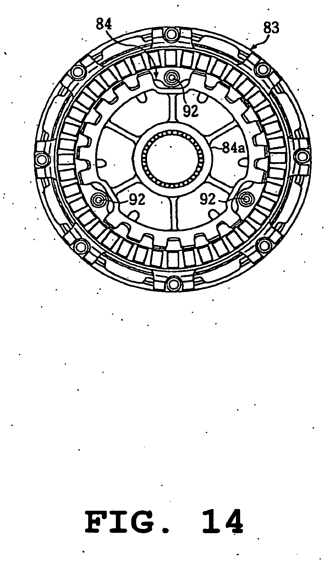

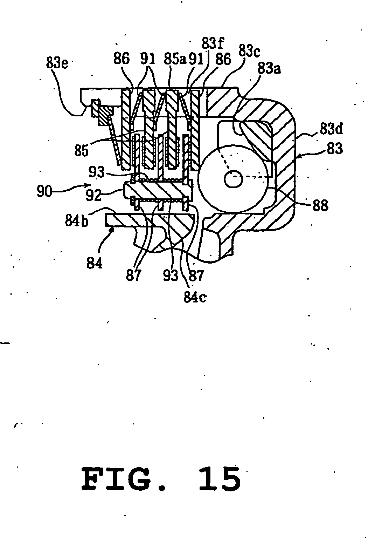

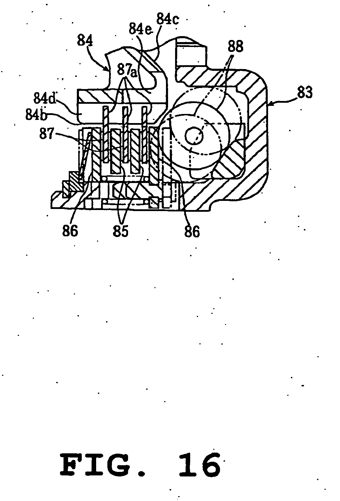

The centrifugal clutch mechanism 17 is located near the inner side in the crankshaft direction of the driven pulley 56. The centrifugal clutch mechanism 17 is of a wet, multiple plate type, as mainly shown in FIG. 3 and FIGs. 12 to 16, constituted in rough description as follows: the boss 83b of an outer clutch 83 is spline-fitted onto the transmission shaft 47 to rotate together. An inner clutch 84 is coaxially placed in the outer clutch 83. The hub portion 84a of the inner clutch 84 is spline-fitted onto the primary reduction small gear 74 to rotate together. Incidentally, the primary reduction small gear 74 is rotatably supported by the transmission shaft 47.

The cup-shape outer clutch 83 is arranged that a peripheral wall 83c at the right end is closed with a bottom wall 83d and an opening 83e is provided at the other end. Further, slits 83f are formed in the peripheral wall 83c at specified intervals to axially extend and pass through the inside.

The inner clutch 84 is arranged that a peripheral wall 84b at one end is closed with a slant bottom wall 84c and an opening is provided at the other end. Slits 84d are formed in the outer surface of the peripheral wall 84b at specified intervals to axially extend in a groove-like manner. Further, a plurality of oil holes 84e are formed in a corner section of the peripheral wall 84b and the bottom wall 84c at specified intervals to pass through the inside.

A plural number of outer clutch plates 85 are placed in the outer clutch 83. The outer clutch plates 85 have an annular shape and are formed with projections 85e at specified intervals around the outer peripheral edge to engage with the slits 83f, thereby being axially movable and rotating together with the outer clutch 83. Further, two pressing plates 86, 86 are placed on both sides of the outer clutch plates 85 and engaged with the outer clutch 83 so as to rotate together with the outer clutch 83.

Inner clutch plates 87 are placed among the outer clutch plates 85 and the pressing plates 86. The inner clutch plates 87 have an annular shape and are formed with projections 87a at specified intervals around the inner peripheral edge, and the projections 87a are engaged with the slits 84d formed in the outer periphery of the inner clutch 84. The inner clutch plates 87 are thus axially movable and rotated together with the inner clutch 84.

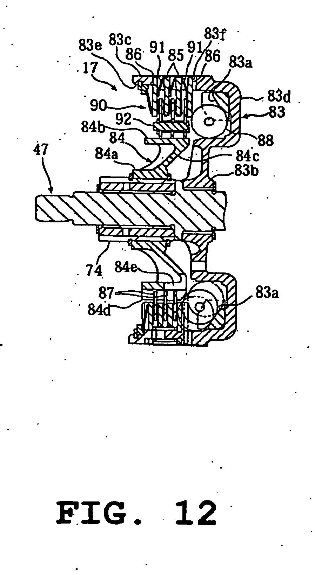

A cam surface 83a is formed inside the outer clutch 83 and weights 88 are placed between the cam surface 83a and the pressing plates 86 located on the outer side. As centrifugal force works on the weights 88, they are moved toward the left and radially outward of the outer clutch 83 in FIG. 12 (in the clutch engagement direction) to move the pressing plates 86 and make the outer and inner clutch plates 85 and 86 engage with each other. Incidentally, the upper half of FIG. 12 shows the centrifugal clutch mechanism 17 in the disengaged state and the lower half shows the engaged state.

The centrifugal clutch mechanism 17 is provided with a clutch plate anti-stick mechanism 90. The clutch plate anti-stick mechanism 90 is constituted with plate springs 91 interposed between the outer clutch plates 85, and between the outer clutch plates 85 and the pressing plates 86 to urge the outer clutch plates 85 and the pressing plates 86 in the direction of parting from each other.

To prevent the inner clutch plates 87 from moving in the axial direction, pins 92 are passed through the inner clutch plates 87 at circumferential intervals. Coil springs 93 are placed among the inner clutch plates 87 to urge them in the direction of parting from each other.

In the centrifugal clutch mechanism 17 of this embodiment, the weights 88 move radially outward by centrifugal force as the engine revolution increases, and their axial positions are determined with the cam surface 83a. When the engine revolution exceeds a predetermined value by the opening operation of the throttle (not shown), the weights 88 press and move the pressing plates 86, and press together the outer and inner clutch plates 85 and 87. Then the engine revolution is transmitted from the transmission shaft 47 through the reduction gear mechanism 18 to the output shaft 48. The rotation of the output shaft 48 causes the rear wheel 7 to rotate through the drive sprocket 49 and the chain 50.

As the throttle is operated to close and the engine revolution decreases, the weights 88 move radially inward. When the engine revolution falls below a predetermined value, pressing force of the weights 88 is released, the outer and inner clutch plates 85 and 87 make relative rotation, and the engine revolution is disengaged between the transmission shaft 47 and the output shaft 48.

As the clutch disengages and the pressing force is released, the outer clutch plates 85 and the pressing plates 86 separate from each other with the repulsive force of the plate springs 91, and the inner clutch plates 87 part from each other with the repulsive force of the coil springs 93.

In this way, the outer and inner clutch plates 85 and 87 are prevented from sticking to each other due to lubricant oil and the clutch is prevented from dragging.

Since pins 92 prevent the inner clutch plates 87 from moving in the axial direction, the inner clutch plates 87 are prevented from tilting when the clutch is disengaged, which also helps prevent the clutch from dragging.

Next will be described the lubricant oil system of the engine 2.

The lubricant oil system is arranged that the lubricant oil in the lubricant oil chamber 95 formed at the bottom portion 22a of the crankcase 22 is drawn up and pressure-fed with a lubricant oil pump 96 to the bearings of the crankshaft 28, camshaft 31, and other sliding parts to be lubricated, and allowed to freely fall and return to the lubricant oil chamber 95.

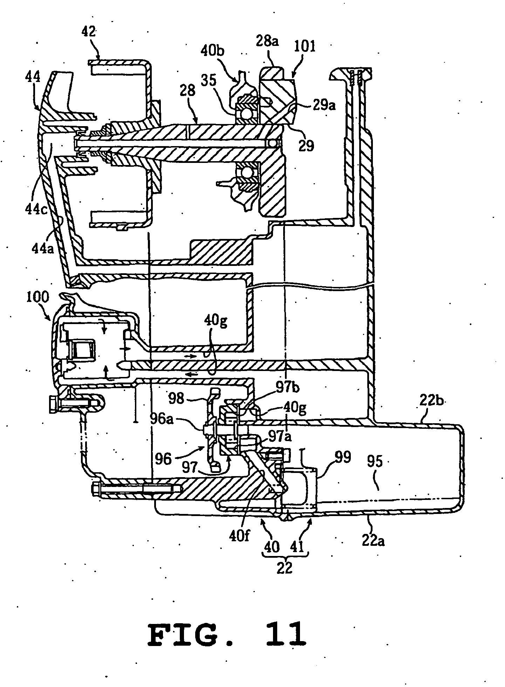

The lubricant oil pump 96, as shown mainly in FIG. 11, is placed in the lower part of the first case 40 of the crankcase 22 and comprises a pump shaft 96a supported with a housing 97 having a suction port 97a and a discharge port 97b, and a pump gear 98 attached to the outside end portion of the pump shaft 96a.

A suction passage 40f communicating with the suction port 97a is formed in the first case 40 and made open through an oil strainer 99 at the bottom surface in the lubricant oil chamber 95. A lubricant oil supply passage 40g communicating with the delivery port 97b is formed also in the first case 40 and made to communicate through an oil filter 100 with a main supply passage 44a formed in the generator case 44. The downstream end of the main supply passage 44a is connected to an oil chamber 44c communicating with the left end surface of the crankshaft 28.

An oil passage 28e communicating with the oil chamber 44c is formed axially in the crankshaft 28 and made open, through a branch passage 29a formed in the crankpin 29, to a connecting bearing portion 101 where the crankpin 29 and the connecting rod 27 are interconnected.

The lubricant oil drawn in with the oil pump 96 is pressure-fed through the supply passage 40g and the main supply passage 44a to the oil passage 28e and then through the branch passage 29a to the connecting bearing portion 101. The lubricant oil supplied to the connecting bearing portion 101 is spread with oil feeding pressure and centrifugal force of the crankshaft 28 within the crank chamber 37. Part of the spread lubricant oil enters the reduction chamber 39 to lubricate the secondary reduction small gear 52a and secondary reduction large gear 48a and falls into the lubricant oil chamber 95.

The bottom portion 22a of the crankcase 22 is integrally formed with a swell portion 22b swelling so as to be underside of the transmission case 45, that is, to be within the projected area of the transmission case 45, as seen in plan view. Forming the swell portion 22b displaces the lateral centerline (D) of the lubricant oil chamber 95 toward the transmission case 45. The oil pump 96 is attached to the inner wall 22c positioned on the side, opposite the transmission case 45, of the lubricant oil chamber 95.

According to the embodiment, since the bottom portion 22a of the crankcase 22 is formed with the swell portion 22b swelling toward the underside of the transmission case 45, the free space under the transmission case 45 is effectively used to increase the amount of lubricant oil in the lubricant oil chamber 95. Therefore, unlike the arrangement in which the depth of the case bottom is increased to secure the amount of lubricant oil, the height of the engine 2 does not need to be increased.

Since the bottom portion 22a of the crankcase 22 is made to swell out toward the underside of the transmission case 45, the surface area of the lubricant oil chamber 95 is increased, so that cooling property is improved accordingly and the weight balance of the engine as a whole is improved.

Here, since this embodiment is arranged that the V-belt is made of a resin member and the transmission case 45 is made to be independent of the crankcase 22, heat resistance and durability of the V-belt are enhanced in comparison with an arrangement using a rubber belt, and thermal effect from the engine is restricted. As a result, it is possible to reduce the diameters of the drive pulley 55 and the driven pulley 56, and the size of the transmission case 45. This makes it possible to produce a free space under the transmission case 45 and accordingly form the swell portion, and increase the lubricant oil capacity.

Next will be described the constitution of lubricating the centrifugal clutch mechanism 17.

The present embodiment is arranged that the lubricant oil spread from the connecting bearing portion 101 of the connecting rod 27 and the crankpin 29 is led to the centrifugal clutch mechanism 17. To be specific, at least part of the clutch mechanism 17 is located in the area over which the lubricant oil is spread, as will be described later. Further, the opening 83e of the outer clutch 83 is directed to the lubricant oil spreading area, and the slits 83f formed in the peripheral wall 83c of the outer clutch 83 are located to face the lubricant oil spreading direction.

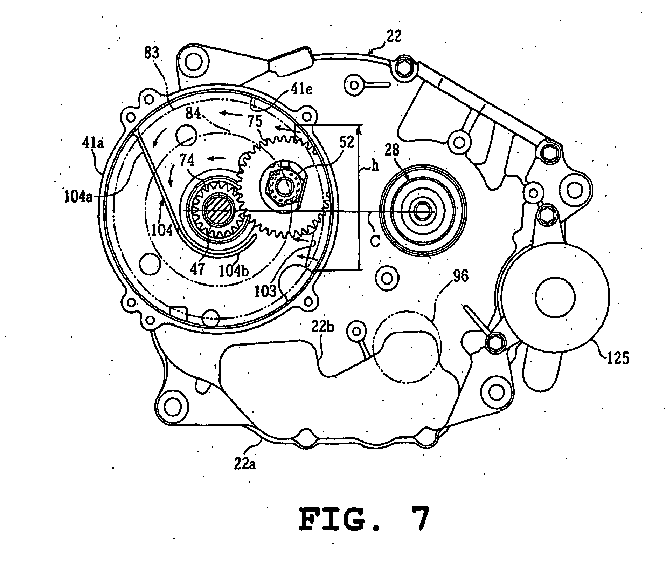

A lead-in opening 103 for permitting the entry of the lubricant oil spread from the connecting bearing portion 101 into the clutch chamber 38 is formed in the second peripheral wall 41 a that defines the crank chamber 37 and the clutch chamber 38. The lead-in opening 103 has a width (w) in the crankshaft direction shown in Fig. 3 by phantom lines, and a height (h) over the area of a plane (C) that includes both the axes of the crankshaft 28 and the transmission shaft (rotational shaft) 47, as shown in Fig. 7.

The foregoing lubricant oil spreading area according to the present embodiment is roughly an area at right angles to a plane along the lead-in opening 103 and a projected area of the lead-in opening 103 from the crankshaft 28 toward the plane (C).

The clutch support wall portion 41 d is integrally formed with a guide portion 104 extending to the inward of the clutch chamber 38. The guide portion 104 is located to intersect with the plane (C) interconnecting the crankshaft 28 and the transmission shaft 47 and comprises a lubricant oil receiving portion 104a extending vertically obliquely so as to generally face the lead-in opening 103 and a guide portion 104b continuously extending in an arcuate shape from the lower end of the lubricant oil receiving portion 104a toward the underside of the transmission shaft 47. The guide portion 104b extends toward the inner clutch 84 so as to enter between the peripheral wall 84d of the inner clutch 84 and a boss portion 84a (see Fig. 3 and Fig. 7).

According to the centrifugal clutch mechanism lubricating structure of the present embodiment, the lubricant oil supplied to the connecting bearing portion 101 is spread within the crank chamber 37 with oil feeding pressure and centrifugal force produced by the rotation of the connecting bearing portion 101. Part of the spread lubricant oil is lead into the clutch chamber 38 through the lead-in opening 103. Part of the lubricant oil led into the clutch chamber 38 is received in the lubricant oil receiving portion 104 and then falls onto the inner periphery of the peripheral wall 84d of the inner clutch 84 by the guide portion 104b. The fallen lubricant oil is supplied between the outer and the inner clutch plates 85, 87 through the oil holes 84e by the centrifugal force produced by the rotation of the inner clutch 84. Another part of the lubricant oil led into the clutch chamber 38 is supplied between the outer and the inner clutch plates 85, 87 through the slits 83f formed in the peripheral wall of the outer clutch 83.

In such a manner as described, this embodiment is arranged that the lubricant oil supplied to the connecting bearing portion 101 of the crankpin 29 and the connecting rod big end 27a is lead to the centrifugal clutch mechanism 17. Therefore, it is possible to supply a large amount of lubricant oil that is spread from the connecting bearing portion 101 to the centrifugal clutch mechanism 17 to prevent the outer and inner clutch plates 85 and 87 from being seized by heat without employing a special lubricant oil path.

This embodiment makes it possible to lead the lubricant oil spread from the crank chamber 37 effectively into the clutch chamber 38 with a very simple constitution since the centrifugal clutch mechanism 17 is located in the clutch chamber 38 separated from the crank chamber 37, and the lead-in opening 103 for permitting the entry of the lubricant oil is formed in the second peripheral wall 41 a that defines the clutch chamber 38 and the crank chamber 37. The clutch mechanism 17 is located so that the opening 83e of the outer clutch 83 is directed to the lubricant oil spreading area and the slits 83f formed in the peripheral wall 83c of the outer clutch 83 is opened in the lubricant oil spreading direction. Therefore, the lubricant oil can be supplied between the outer and the inner clutch plates, and the clutch plates can be prevented from being seized by heat.

This embodiment is arranged that the clutch support wall portion 41 d is integrally formed with a guide portion 104 extending to the inward of the clutch chamber 38. The guide portion 104 is located on the extension of the line interconnecting the crankshaft 28 and the transmission shaft 47 and comprises a lubricant oil receiving portion 104a extending vertically so as to generally face the lead-in opening 103 and a guide portion 104b continuously extending in an arcuate shape from the lower end of the lubricant oil receiving portion 104a toward the underside of the transmission shaft 47. Therefore, lubricant oil is supplied more securely to the outer and inner clutch plates 85 and 87.

More specifically, the lubricant oil which entered through the lead-in opening 103 is first received by the lubricant oil receiving portion 104a, flows into the inner clutch 84 from the receiving portion 104a through the guide portion 104b, and then falls onto the inner surface of the peripheral wall 84b or boss portion 84a of the inner clutch 84. The fallen lubricant oil is then blown outward by the centrifugal force produced by the rotation of the inner clutch 84, and supplied between the outer and the inner clutch plates 85, 87 through the oil holes 84e.

Incidentally, in the foregoing embodiment, description has been made of the wet type, multi-plate, automatic centrifugal clutch. The present invention, however, can also be used for a wet type, multi-plate, manual clutch.

Further, the use of the present invention is not limited to the wet type, multi-plate clutch but to a so-called shoe-type, automatic centrifugal clutch mechanism disclosed in the foregoing citations. The shoe-type, automatic centrifugal clutch mechanism is arranged so that a cup-shape outer clutch is fixed to an output shaft, an input member is located in the outer clutch, the input member is fixed to an input shaft, a shoe is swingably supported by the input member, and the shoe comes in contact with the inner surface of the outer clutch by centrifugal force.

The outer clutch is located in a clutch chamber so that the opening of the outer clutch is directed to the foregoing lubricant oil spreading area, and slits formed in the outer clutch face the lubricant oil spreading direction.

The same effects can be obtained as with the foregoing embodiment in such a way as described.

Next will be described the kick mechanism of the engine 2.

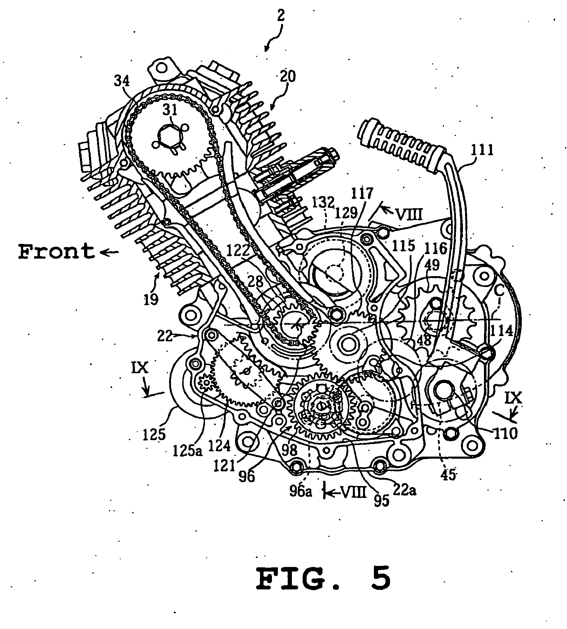

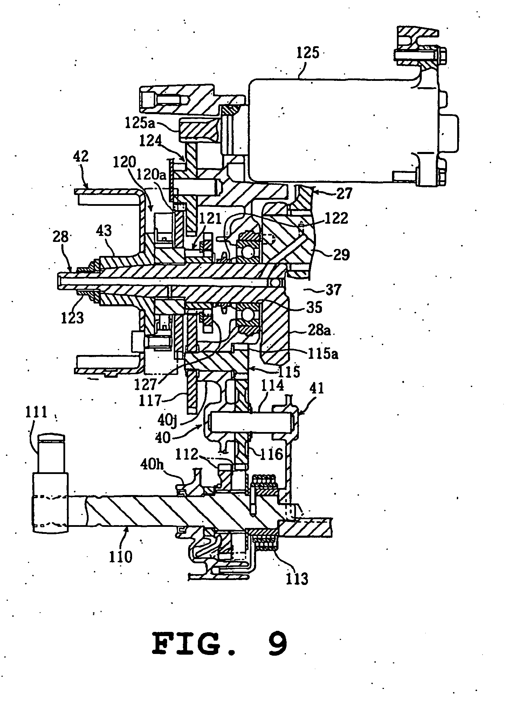

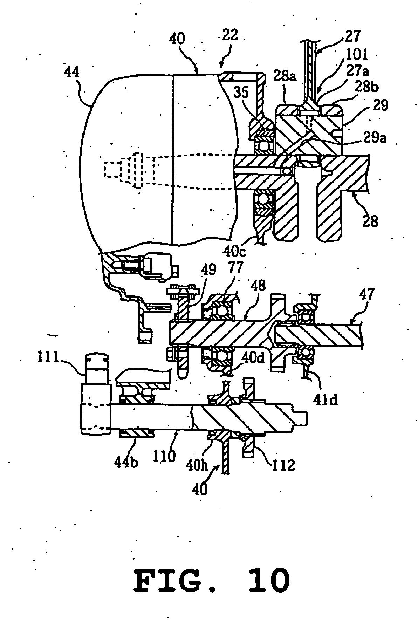

As mainly shown in FIGs. 5, 9, and 10, a kick shaft 110 is placed parallel to and nearly vertically below the output shaft 48. The kick shaft 110, as seen at right angles to the crankshaft direction, is journal-supported at the portion inside the drive sprocket 49 with the boss portion 40h of the first case 40 and at the outside portion with the boss portion 44b formed integrally with the generator cover 44.

A kick arm 111 is attached to the outer end of the kick shaft 110. A kick gear 112 is spline-fitted, to be axially slidable, onto the inside end portion of the kick shaft 110 and located inside the first case 40. A return spring 113 is wound around the inside end portion of the kick shaft 110 to urge the kick shaft 110 toward the starting position.

A main intermediate shaft 114 and a sub-intermediate shaft 115 are placed between the kick shaft 110 and the crankshaft 28 and parallel to the kick shaft 110. The main intermediate shaft 114 extends between the first and second cases 40 and 41 and journal-supported with them. A main intermediate gear 116 capable of engaging with the kick gear 112 is attached to the main intermediate shaft 114.

The sub-intermediate shaft 115 is journal-supported with the bearing portion 40j formed in the first case 40. The inside and outside ends of the sub-intermediate shaft 115 project respectively inward and outward of the first case 40. A first intermediate gear 115a for engaging with the main intermediate gear 116 is integrally formed inside the case of the sub-intermediate shaft 115 and a second intermediate gear 117 is attached outside the case. The second intermediate gear 117 engages with a first crank gear 121 which will be described later.

As the kick arm 111 is kicked down, the kick shaft 110 rotates, the kick gear 112 moves axially and engages with the main intermediate gear 116 to transmit the rotation to the first crank gear 121 through the first and second intermediate gears 115a and 117 and rotate the crankshaft 28.

Part of the crankshaft 28 between the left journal bearing 35 and the sleeve 43 of the generator 42 is provided with a one-way clutch 120, the first crank gear 121, and a cam sprocket 122 in the order from outer side.

The one-way clutch 120 is provided with a starting gear 120a connected through an idler gear 124 to a drive gear 125a of a starter motor 125. The starter motor 125, with its motor axis parallel to the crankshaft 28, is secured to the front wall of the crankcase 22.

The kick gear 112, the main intermediate gear 116, and the first intermediate gear 115a are located in a position that communicates with the lubricant oil chamber 95 inside the first case 40. The second intermediate gear 117, the first crank gear 121, and the cam sprocket 122 are located outside the first case 40.

Since the kick mechanism of this embodiment is arranged that the kick gear 112, the main intermediate gear 116, and the first intermediate gear 115a are located in the position that communicates with the lubricant oil chamber 95, engaging parts of those gears are sufficiently lubricated.

Since the sub-intermediate shaft 115 is made to pass through the first case 40 from the inside to the outside to transmit the rotation of the kick shaft 110 from the inner side of the sub-intermediate shaft 115 to the outer side, and from the second intermediate gear 117 on the outer side to the crankshaft 28 through the first crank gear 121, it is possible to locate the first crank gear 121 on the outer side than the crank journal portion 28c, to reduce the distance between the crankshaft bearings 35 and 36, and to journal-support the crankshaft 28 while reducing the bending moment due to the connecting rod 27. It is also possible to secure the layout space for the cam sprocket 122 and the second crank gear 127 to facilitate the layout around the crankshaft. In other words, if it were arranged that the rotation of the kick shaft 110 is transmitted to the crankshaft 28 within the first case 40, a gear would be required between the left crankshaft bearing 35 and the left crank arm 28a, the distance between the left and right bearings 35 and 36 would increase to the disadvantage of the bending moment mentioned above.

Since this embodiment is arranged that the kick shaft 110 is located nearly vertically below the output shaft 48, the kick arm 111 is easy to kick down and the size of the engine 2 can be reduced in the longitudinal direction of the vehicle.

Part of the kick shaft 110 on the inner side in the vehicle width direction of the rear wheel drive sprocket 49 is journal-supported with the first clutch support wall portion 40d, part of it on the outer side in the vehicle width direction is journal-supported with the generator case 44, and the kick arm 111 is attached to part of the kick shaft 111 projecting to the outer side of the kick shaft 110 than the generator case 44. Therefore, it is possible to place the kick shaft 110 and the kick arm 111 in optimum positions for kicking down without interfering with the rear wheel drive sprocket 49.

As shown in FIG. 4, the kick shaft 110, as seen in the crankshaft direction, is located within the axial projection area of the transmission case 45 and within the axial projection area of the centrifugal clutch mechanism 17. That is to say, it is located nearly just below the driven pulley 56.

Since the kick shaft 110 is placed on the opposite side of the transmission case 45 as described above, a space for placing the kick shaft need not be secured in the transmission case 45, so that it is possible to place the drive pulley 55 and the driven pulley 56 of the CVT 16 close to each other to the extent that only a small gap (b) (see FIG 3) exists and accordingly the dimension of the engine 2 is reduced in the longitudinal direction of the vehicle.

Since the kick shaft 110 is placed within the area of projection in the crankshaft direction of the crankcase 45, it is possible to place the kick shaft 110 in a position that is near the crankshaft 28 and easy to kick down.

Since this embodiment is arranged that the centrifugal clutch mechanism 17 is placed in the vicinity on the inner side in the crankshaft direction of the driven pulley 56, and since the kick shaft 110 is placed in a position that is within the axial projection area of the centrifugal clutch mechanism 17 and nearly vertically below the transmission shaft 47, it is possible to utilize a free space within the projection area of the centrifugal clutch mechanism to locate the kick shaft 110 in the optimum position for kicking down and to reduce the size of the engine 2 in the vehicle's longitudinal direction.

A balancer shaft 129 is placed parallel to and rearward above the crankshaft 28. The balancer shaft 129 is journal-supported through balancer shaft bearings 130 and 131 with the first and second cases 40 and 41. The left end of the balancer shaft 129 projects outside the first case 40 and is connected to a balancer gear 132. A damping member 133 is attached to the inside circumferential surface of the balancer gear 132.

Here, the left and right crank arms 28a and 28b of the crankshaft 28 are located inside the balancer bearings 130 and 131, and the balancer weight 129a of the balancer shaft 129 is placed between the left and right crank arms 28a and 28b and near the crankshaft 28 so as to be superposed on the rotary locus of the crankpin 29. This makes the area around the balancer shaft compact.

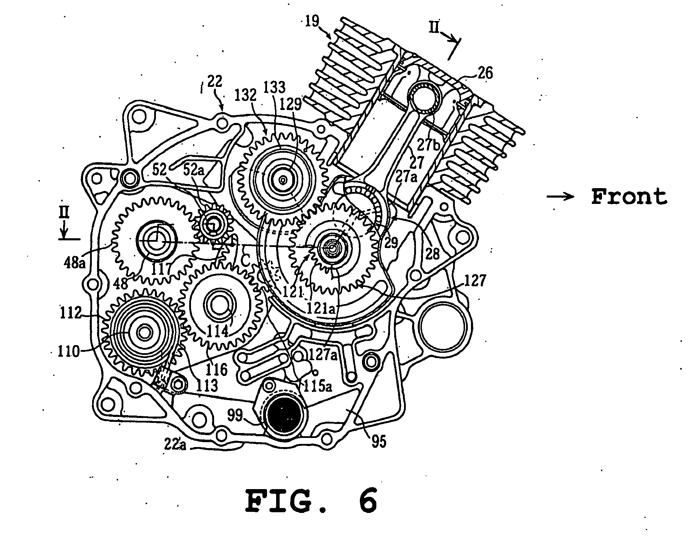

The crankshaft 28 is press-fit into the first crank gear (first drive gear) 121 to which is attached a second crank gear (second drive gear) 127 to rotate together. The balancer gear (second driven gear) 132 engages with the second crank gear 127. That is to say, inside circumferential teeth 127a are formed on the inside circumferential surface of the second crank gear 127, with the inside circumferential teeth 127a engaging with the outside circumferential teeth 121 a of the first crank gear 121 (see FIG. 6). In this way, the rotation of the crankshaft 28 is transmitted from the first crank gear 121 through the second crank gear 127 to the balancer gear 132.

The pump gear (first driven gear) 98 is connected through the second intermediate gear 117 to the first crank gear 121. In this way, the first crank gear 121 and the second intermediate gear 117 are used for both kick starting and oil pump drive.

The one-way clutch 120, the first crank gear 121, and the cam sprocket 122 attached to the crankshaft 28 are held to be axially immovable between the sleeve 43 and the journal bearing 35 as a nut 123 is screwed and tightened to the left end portion of the crankshaft 28.

This embodiment is arranged that the second intermediate gear 117 engaging with the first crank gear 121 is used both for transmitting the rotation of the kick shaft 110 to the crankshaft 28 and for transmitting the rotation of the crankshaft 28 to the gear pump 98, so that it is possible to reduce the crankshaft length accordingly and make the engine compact in width.

Since the first crank gear 121 press-fitted into the crankshaft 28 engages with the inside circumferential teeth 127a of the second crank gear 127 and with the second intermediate gear 117, it is possible to secure a sufficient length of the first crank gear 121 to be press-fitted into the crankshaft 28 and reliably transmit the rotation of the crankshaft 28 to the pump gear 98 and the balancer gear 132.

In this embodiment, it is configured that the outside circumferential teeth 121 a of the first crank gear 121 engage with the inside circumferential teeth 127a of the second crank gear 127 so that the second crank gear 127 can be easily assembled, and removed for the purpose of maintenance. That is, the second crank gear 127 can be easily removed from the first crank gear 121 after removing the nut 123 from the crankshaft 28 and taking out the sleeve 43 and the one-way clutch 121.

The positioning arrangement of various shafts of the engine 2 is as follows.

As seen in the crankshaft direction, the transmission shaft 47 and the output shaft 48 are behind and on the same level with the crankshaft 28. The balancer shaft 129 and the reduction shaft 52 are placed above the plane (C) that includes the axes of the crankshaft 28 and the output shaft 48. The kick shaft 110, the pump shaft 96a, and the main and sub-intermediate shafts 114 and 115 are placed above the plane (C).

The kick shaft 110 is placed nearly vertically below the output shaft 48. The pump shaft 96a is placed nearly vertically below the balancer shaft 129. The main and sub-intermediate shafts 114, 115 are placed on the line interconnecting the crankshaft 28 and the kick shaft 110.

This embodiment is arranged that the balancer shaft 129 is placed above the plane (C) that includes the axes of the crankshaft 28 and the output shaft 48, and the kick shaft 110 and the pump shaft 96a of the oil pump 96 are below the plane (C), so that those components are well balanced in upper and lower positions to avoid increase in the engine size. That is, a free space exists behind the cylinder bore and above the plane (C), and the space is used to place the balancer shaft 129. Since the balancer shaft 129 rotates with a large rotation locus of the weight 129a, if the weight were dipped in lubricant oil, a large amount of horsepower would be lost as lubricant oil is stirred. With this embodiment, however, the balancer shaft 129 does not stir lubricant oil. This embodiment is also arranged that the reduction shaft 52 is placed by utilizing the free space located above the plane (C) and between the balancer shaft 129 and the output shaft 48. Although the reduction shaft 52 is placed in a high position that is less likely to be spread with lubricant oil, since lubricant oil spread from the connecting bearing portion 101 of the connecting rod of the crankshaft 28 is supplied to the reduction gear 75 and other parts, no problem occurs as to poor lubrication.

Since the kick shaft 110 is placed nearly vertically below the output shaft 48, it is possible to reduce the longitudinal size of the engine 2 and place the kick shaft 110 in a position where it is easy to kick down.

As described above, a clutch mechanism lubricating structure is provided for an engine, such as for a motorcycle engine, for example, with a clutch mechanism on a rotational shaft, preferably in parallel with a crankshaft.

As described above, a clutch mechanism lubricating structure for an engine is provided comprising a crankshaft connected with a big end of a connecting rod connected at a crankpin that is located between a pair of crank arms, and a wet type clutch mechanism mounted on a rotational shaft located in parallel with the crankshaft, wherein lubricant oil supplied to the connecting portion of the crankpin and the big end of the connecting rod is led to the clutch mechanism.

Preferably, in such a clutch mechanism lubricating structure for an engine at least part of the clutch mechanism is located in the area over which the lubricant oil is spread from the connecting portion of the connecting rod and the crankpin.

Moreover, preferably the clutch mechanism is of a wet, multi-plate type arranged so that an inner clutch is coaxially placed in a cup-shape outer clutch with an axial end open, one of the inner and the outer clutches is connected to the input side of the rotational shaft and the other the output side, and a plurality of inner and outer clutch plates are interposed between the inner and the outer clutches, and in which the opening of the outer clutch is directed to the lubricant oil spreading area.

Incidentally, the clutch mechanism includes the ones of an automatic centrifugal type using the centrifugal force which works on weights and of a manual type.

According to a preferred embodiment, the clutch mechanism is of an automatic centrifugal type arranged so that an input member to be rotated by centrifugal force and come in contact with the inner surface of the outer clutch is placed in the cup-shape outer clutch with an axial end open, and the input member and the outer clutch are connected to the input and the output sides of the rotational shaft, respectively, and in which the opening of the outer clutch is directed to the lubricant oil spreading area.

Preferably, a plurality of slits are formed in the peripheral wall of the outer clutch to pass through the inside, the slits being directed and opened in the lubricant oil spreading direction.

According to a further preferred embodiment, the clutch mechanism is located in a clutch chamber separated from a crank chamber for housing the connecting portion and the crank arms, and in which a partition wall of the clutch chamber and the crank chamber is formed with a lead-in opening for permitting the entry of the spread lubricant oil into the clutch chamber.

Therein, preferably the lead-in opening is formed over the area of a plane that includes both the rotational shaft and the crankshaft.

Also, preferably a guide portion is provided to receive and guide the spread lubricant oil more to the inner side than to the outer side of the clutch mechanism.

It is further preferred that the guide portion is constituted of a lubricant oil receiving portion located to face and receive the spread lubricant oil, and a guide portion extending toward the inside of the outer clutch from the lubricant oil receiving portion to guide the lubricant oil received in the lubricant oil receiving portion to the inside of the outer clutch.

Preferably, the clutch mechanism is a wet, multi-plate clutch in which an inner clutch is coaxially disposed in a bowl-shaped outer clutch which is made to open at an axial end thereof, in which one of the inner and outer clutches is connected to an input side of the rotational shaft and the other to an output side thereof, and in which a plurality of inner and outer clutch plates are interposed between the inner and outer clutches, and wherein an opening of the outer clutch is directed to a lubricating oil splashing area.

Also, preferably the clutch mechanism is an automatic centrifugal clutch in which an input member is disposed in a bowel-shaped outer clutch which is made to open at an axial end thereof in such a manner as to be rotated by virtue of a centrifugal force so as to come into abutment with an inner surface of the outer clutch and in which the input member and the outer clutch are connected to the input side and the output side of the rotational shaft, respectively, and wherein an opening of the outer clutch is directed to the lubricating oil splashing area.

It is further preferred that a plurality of slits are formed in an outer circumferential wall of the outer clutch in such a manner as to pass therethrough to an interior of the outer clutch, and wherein the slits are made to open in a direction in which the lubricating oil splashes.

Preferably, the clutch mechanism is disposed in a clutch chamber defined by a crank chamber which accommodates therein the connecting portion and the crank arms, and wherein an introduction opening is formed in a bulkhead between the two chambers for allowing the splashing lubricating oil to enter the clutch chamber.

Therein, preferably the introduction opening is formed in such a manner as to expand between areas on both sides of a plane including both the rotational shaft and the crankshaft.

Moreover, preferably a guide portion is provided which is adapted for receiving the splashing lubricating oil and guiding more lubricating oil so received to an inside of the clutch mechanism than to an outside thereof.

Preferably, the guide portion comprises a lubricating receiving portion disposed in such a manner as to face the splashing lubricating oil to receive the splashing lubricating oil and a sub-guiding portion which extends from the lubricating oil receiving portion to the interior of the outer clutch so as to guide lubricating oil received by the lubricating oil receiving portion to the interior of the outer clutch.

As also explained above, a clutch mechanism lubricating structure for an engine is provided comprising a crankshaft to which a big end of a connecting rod is connected via a crankpin disposed between a pair of crank arms and a wet clutch mechanism mounted on a rotational shaft disposed in parallel with the crankshaft, wherein a drive-side pulley of a dry V-belt continuously variable transmission is mounted on an end of the crankshaft, in that an oil hole is formed in such a manner as to extend from the other end of the crankshaft to communicate with a connecting portion where the bid end of the connecting rod is connected to the crankpin so that a lubricating oil is supplied to the connecting portion via the oil hole, and in that the clutch mechanism is disposed within a lubricating splashing area over which a lubricating oil from the connecting portion splashes, whereby the lubricating oil is guided to the clutch mechanism.

Furthermore, as described above, a clutch mechanism lubricating structure for an engine comprising a crankshaft to which a big end of a connecting rod is connected via a crankpin disposed between a pair of crank arms and a wet clutch mechanism mounted on a rotational shaft disposed in parallel with the crankshaft is provided, wherein the clutch mechanism is a centrifugal multi-plate clutch in which a plurality of clutch plates are disposed on an open side of a bowl-shaped outer clutch which is made to open at an axial end thereof in such a manner that the plurality of clutch plates are brought into press contact with a bottom side of the outer clutch when the plurality of clutch plates are moved radially outwardly by a centrifugal force, and in that an opening of the outer clutch is disposed so as to be positioned within a lubricating oil splashing area over which a lubricating oil from a connecting portion where the big end of the connecting rod is connected to the crankpin splashes, whereby a lubricating oil supplied to the connecting portion is guided to the clutch mechanism.

Preferably, the clutch mechanism is a wet, multi-plate clutch in which an inner clutch is coaxially disposed in a bowl-shaped outer clutch which is made to open at an axial end thereof, in which one of the inner and outer clutches is connected to an input side of the rotational shaft and the other to an output side thereof, and in which a plurality of inner and outer clutch plates are interposed between the inner and outer clutches, and wherein an opening of the outer clutch is directed to a lubricating oil splashing area.

Also, preferably the clutch mechanism is an automatic centrifugal clutch in which an input member is disposed in a bowel-shaped outer clutch which is made to open at an axial end thereof in such a manner as to be rotated by virtue of a centrifugal force so as to come into abutment with an inner surface of the outer clutch and in which the input member and the outer clutch are connected to the input side and the output side of the rotational shaft, respectively, and wherein an opening of the outer clutch is directed to the lubricating oil splashing area.

Further, preferably a plurality of slits are formed in an outer circumferential wall of the outer clutch in such a manner as to pass therethrough to an interior of the outer clutch, and wherein the slits are made to open in a direction in which the lubricating oil splashes.

According to an embodiment, the clutch mechanism is disposed in a clutch chamber defined by a crank chamber which accommodates therein the connecting portion and the crank arms, and wherein an introduction opening is formed in a bulkhead between the two chambers for allowing the splashing lubricating oil to enter the clutch chamber.

Moreover, preferably the introduction opening is formed in such a manner as to expand between areas on both sides of a plane including both the rotational shaft and the crankshaft.

Also, preferably a guide portion is provided which is adapted for receiving the splashing lubricating oil and guiding more lubricating oil so received to an inside of the clutch mechanism than to an outside thereof.

Further, preferably the guide portion comprises a lubricating receiving portion disposed in such a manner as to face the splashing lubricating oil to receive the splashing lubricating oil and a sub-guiding portion which extends from the lubricating oil receiving portion to the interior of the outer clutch so as to guide lubricating oil received by the lubricating oil receiving portion to the interior of the outer clutch.

Preferably, the guide portion extends in such a manner as to enter the interior of the outer clutch from the opening thereof.

As described above, a clutch mechanism lubricating structure for an engine is provided comprising a crankshaft connected with a big end of a connecting rod connected at a crankpin that is located between a pair of crank arms, and a wet type clutch mechanism mounted on a rotational shaft located in parallel with the crankshaft, wherein lubricant oil supplied to the connecting portion of the crankpin and the big end of the connecting rod is led to the clutch mechanism.

## Claims

1. Engine with a lubricating structure for a clutch mechanism comprising a crankshaft (28) to which an end (27a) of a connecting rod (27) is connected via a crankpin (29) located between a pair of crank arms (28a,28b), and a wet type clutch mechanism (17), **characterized by** comprising means for providing lubricant oil supplied to a connecting portion of the crankpin (29) and the end (27a) of the connecting rod (27) and from there to the clutch mechanism (17) mounted on a rotational shaft (47) located in parallel with the crankshaft (28).

2. Engine according to claim 1, **characterized in that** at least part of the clutch mechanism (17) is located in an area over which the lubricant oil is spread from the connecting portion of the connecting rod (27) and the crankpin (29).

3. Engine according to claim 1 or 2, **characterized in that** the clutch mechanism (17) has a bowl-shaped outer clutch (83) which comprises an open end (83e) at an axial end side thereof, and wherein the open end (83e) of the outer clutch (83) is directed to or located within a lubricating oil splashing area.

4. Engine according to claim 3, **characterized in that** the clutch mechanism (17) is a multi-plate clutch wherein an inner clutch (84) is coaxially disposed in the outer clutch (83), one of the inner and outer clutches (84,83) being connected to an input side of the rotational shaft (47) and the other to an output side thereof, and wherein a plurality of inner and outer clutch plates (85,86,87) are interposed between the inner and outer clutches (84,83).

5. Engine according to claim 3 or 4, **characterized in that** the clutch mechanism (17) is an automatic centrifugal clutch, wherein an input member is disposed in the outer clutch (83), the input member being configured to be rotated by virtue of a centrifugal force and thereby to come into abutment with an inner surface of the outer clutch (83), and wherein the input member and the outer clutch (83) are connected to the input side and the output side of the rotational shaft (47), respectively.

6. Engine according to at least one of the claims 3 to 5, **characterized in that** a plurality of slits (83f) are formed in an outer circumferential wall of the outer clutch in such a manner as to pass therethrough to an interior of the outer clutch (83), and wherein the slits (83f) are made to open in a direction in which the lubricating oil splashes.

7. Engine according to at least one of the claims 1 to 6, **characterized in that** the clutch mechanism (17) is disposed in a clutch chamber (38) separated from a crank chamber (37) which accommodates therein the connecting portion and the crank arms (28a,28b), and wherein an introduction opening (103) is provided between the two chambers (37,38) for allowing the splashing lubricating oil to enter the clutch chamber (38).

8. Engine according to claim 7, **characterized in that** the introduction opening (103) is formed in such a manner as to expand between areas on both sides of a plane (C) including both rotational shaft (47) and the crankshaft (28).

9. Engine according to at least one of the claims 1 to 8, **characterized in that** a guide portion (104) is provided adapted to receive the splashing lubricating oil and to guide more of lubricating oil so received to an inside of the clutch mechanism (17) than to an outside thereof.

10. Engine according to claim 9, **characterized in that** the guide portion (104) comprises a lubricating receiving portion (104a) disposed in such a manner as to face the splashing lubricating oil to receive the splashing lubricating oil and a sub-guiding portion (104b) which extends from the lubricating oil receiving portion (104a) to an interior of the outer clutch (83) configured to guide lubricating oil received by the lubricating oil receiving portion (104a) to the interior of the outer clutch (83).

11. Engine according to at least one of the claims 1 to 9, **characterized in that** a drive-side pulley (55) of a dry V-belt continuously variable transmission (16) is mounted on a first end of the crankshaft (28) and **in that** an oil supply hole extends from a second end of the crankshaft (28) to communicate with the connecting portion for providing a supply of lubricating oil to the connecting portion and further to a lubricating splashing area.

12. Engine according to at least one of the claims 3 to 11, **characterized in that** an output gear (75) is disposed in the vicinity of the open end (83e) of the outer clutch (83) and **in that** the open end (83e) and the output gear (75) are located within the lubricating oil splashing area.

13. Vehicle, in particular a motorcycle, **characterized by** comprising an engine according to at least one of the claims 1 to 12.

## Patentansprüche

1. Brennkraftmaschine mit einem Schmierungsaufbau für eine Kupplungsvorrichtung, aufweisend eine Kurbelwelle (28), an der ein Ende (27a) einer Pleuelstange (27) über einen Kurbelbolzen (29), angeordnet zwischen einem Paar von Kurbelarmen (28a, 28b), verbunden ist und eine Kupplungsvorrichtung (17) vom Naß-Typ, **gekennzeichnet durch** aufweisend eine Einrichtung zum Bereitstellen von Schmieröl, zugeführt zu einem Verbindungsabschnitt des Kurbelbolzens (29) und dem Ende der Pleuelstange (27), und von dort zu der Kupplungsvorrichtung (17), montiert auf einer Drehwelle (47), angeordnet parallel mit der Kurbelwelle (28).

2. Brennkraftmaschine nach Anspruch 1, **dadurch gekennzeichnet, dass** zumindest ein Teil der Kupplungsvorrichtung (17) in einem Bereich angeordnet ist, über den das Schmieröl von dem Verbindungsabschnitt der Pleuelstange (27) und dem Kurbelbolzen (29) verteilt wird.

3. Brennkraftmaschine nach Anspruch 1 oder 2, **dadurch gekennzeichnet, dass** die Kupplungsvorrichtung (17) eine schalenförmige, äußere Kupplung (83) hat, die ein offenes Ende (83e) auf einer axialen Endseite derselben hat, und wobei das offene Ende (83e) gerichtet ist zu oder angeordnet ist innerhalb eines Schmieröl- Spritzbereiches.

4. Brennkraftmaschine nach Anspruch 3, **dadurch gekennzeichnet, dass** die Kupplungsvorrichtung (17) eine Mehrplattenkupplung ist, wobei eine innere Kupplung (84) in der äußeren Kupplung (84) koaxial angeordnet ist, eine von der inneren oder äußeren Kupplungen (84, 83) mit einer Eingangsseite der Drehwelle (47) und die andere mit einer Ausgangsseite derselben verbunden ist, und wobei eine Mehrzahl von inneren und äußeren Kupplungsplatten (85, 86, 87) zwischen die inneren und äußeren Kupplungen (84, 83) eingesetzt ist.

5. Brennkraftmaschine nach Anspruch 3 oder 4, **dadurch gekennzeichnet, dass** die die Kupplungsvorrichtung (17) eine automatische Fliehkraftkupplung ist, wobei ein Eingangsteil in der äußeren Kupplung (83) angeordnet ist, das Eingangsteil konfiguriert ist, um durch die Wirkung einer Zentrifugalkraft gedreht zu werden und **dadurch** in Anlage mit einer inneren Oberfläche der äußeren Kupplung (83) zu kommen, und wobei das Eingangsteil und die äußere Kupplung (83) jeweils mit der Eingangsseite oder der Ausgangsseite der Drehwelle (47) verbunden sind.

6. Brennkraftmaschine nach zumindest einem der Ansprüche 3 bis 5, **dadurch gekennzeichnet, dass** eine Mehrzahl von Schlitzen (83f) in einer äußeren Umfangswand der äußeren Kupplung in solch einer Weise ausgebildet ist, um dort hindurch sich ins Innere der äußeren Kupplung (83) zu erstrecken, und wobei die Schlitze (83f) veranlasst sind, sich in eine Richtung zu öffnen, in der das Schmieröl spritzt.

7. Brennkraftmaschine nach zumindest einem der Ansprüche 1 bis 6, **dadurch gekennzeichnet, dass** die Kupplungsvorrichtung (17) in einer Kupplungskammer (38), getrennt von einer Kurbelkammer (37), die darin den Verbindungsabschnitt und die Kurbelarme (28a, 28b) aufnimmt, angeordnet ist und wobei eine Einleitungsöffnung (103) zwischen den zwei Kammern (37, 38) vorgesehen ist, um dem spritzenden Schmieröl zu gestatten, in die Kupplungskammer (38) einzudringen.

8. Brennkraftmaschine nach Anspruch 7, **dadurch gekennzeichnet, dass** die Einleitungsöffnung (103) in solch einer Weise gebildet ist, um sich zwischen Bereichen auf beiden Seiten einer Ebene (C), die sowohl die Drehwelle (47), als auch die Kurbelwelle (28) enthält, auszudehnen.

9. Brennkraftmaschine nach zumindest einem der Ansprüche 1 bis 8, **dadurch gekennzeichnet, dass** ein Führungsabschnitt (104) geschaffen ist, vorgesehen, um das spritzende Schmieröl aufzunehmen und mehr von dem so empfangenen Schmieröl zu einer Innenseite der Kupplungsvorrichtung (17) als zu einer Außenseite derselben zu führen.

10. Brennkraftmaschine nach Anspruch 9, **dadurch gekennzeichnet, dass** der Führungsabschnitt (104) aufweist einen Schmieröl- Aufnahmeabschnitt (104a), angeordnet in solch einer Weise, um dem spritzenden Schmieröl zugewandt zu sein, um das spritzende Schmieröl aufzunehmen und einen Unter- Führungsabschnitt (104b), der sich von dem Schmieröl- Aufnahmeabschnitt (104a) zu einem Inneren der äußeren Kupplung (83) erstreckt, konfiguriert, um Schmieröl, aufgenommen durch den Schmieröl- Aufnahmeabschnitt (104a) in das Innere der äußeren Kupplung (83) zu führen.

11. Brennkraftmaschine nach zumindest einem der Ansprüche 1 bis 9, **dadurch gekennzeichnet, dass** eine antriebsseitige Riemenscheibe (55) eines trockenen, stufenlos veränderbaren Keilriemengetriebes (16) an einem ersten Ende der Kurbelwelle (28) montiert ist und **dadurch**, dass sich eine Ölzuführungsbohrung von einem zweiten Ende der Kurbelwelle (28) erstreckt, um mit dem Verbindungsabschnitt in Verbindung zu sein, um eine Zuführung von Schmieröl zu dem Verbindungsabschnitt und außerdem zu einem Schmierungsspritzbereich zu schaffen.

12. Brennkraftmaschine nach zumindest einem der Ansprüche 3 bis 11, **dadurch gekennzeichnet, dass** ein Ausgangszahnrad (75) in der Nähe des offenen Endes (83e) der äußeren Kupplung (83) angeordnet ist und **dadurch**, dass das offene Ende (83e) und das Ausgangszahnrad (75) innerhalb des Schmierölspritzbereiches angeordnet sind.

13. Fahrzeug, insbesondere ein Motorrad, **gekennzeichnet durch** eine Brennkraftmaschine nach zumindest einem der Ansprüche 1 bis 12.

## Revendications

1. Moteur avec une structure de lubrification pour un mécanisme d'embrayage comprenant un vilebrequin (28) auquel une extrémité (27a) d'une bielle (27) est connectée par l'intermédiaire d'un maneton (29) situé entre une paire de bras de manivelle (28a, 28b), et un mécanisme d'embrayage de type humide (17), **caractérisé en ce qu'**il comprend un moyen pour fournir de l'huile de lubrification à une partie de connexion du maneton (29) et à l'extrémité (27a) de la bielle (27) et de là jusqu'au mécanisme d'embrayage (17) monté sur un arbre rotationnel (47), situé en parallèle au vilebrequin (28).

2. Moteur selon la revendication 1, **caractérisé en ce qu'**au moins une partie du mécanisme d'embrayage (17) est située dans une zone sur laquelle l'huile de lubrification est étalée à partir de la partie de connexion de la bielle (27) et du maneton (29).

3. Moteur selon la revendication 1 ou 2, **caractérisé en ce que** le mécanisme d'embrayage (17) a un embrayage extérieur en forme de bol (83) qui comprend une extrémité ouverte (83e) sur un côté d'extrémité axiale de celui-ci, et dans lequel l'extrémité ouverte (83e) de l'embrayage extérieur (83) est dirigée vers ou située dans une zone de giclement d'huile de lubrification.

4. Moteur selon la revendication 3, **caractérisé en ce que** le mécanisme d'embrayage (17) est un embrayage multi-plaques dans lequel un embrayage intérieur (84) est disposé de manière coaxiale dans l'embrayage extérieur (83), l'un des embrayages intérieur et extérieur (84, 83) étant connecté à un côté d'entrée de l'arbre rotationnel (47) et l'autre étant connecté à un côté de sortie de celui-ci, et dans lequel une pluralité de plaques d'embrayages intérieur et extérieur (85, 86, 87) sont interposées entre les embrayages intérieur et extérieur (84, 83).

5. Moteur selon la revendication 3 ou 4, **caractérisé en ce que** le mécanisme d'embrayage (17) est un embrayage centrifuge automatique, dans lequel un élément d'entrée est disposé dans l'embrayage extérieur (83), l'élément d'entrée étant configuré pour être tourné sous l'effet d'une force centrifuge et venir de ce fait en butée contre une surface intérieure de l'embrayage extérieur (83), et dans lequel l'élément d'entrée et l'embrayage extérieur (83) sont connectés respectivement au côté d'entrée et au côté de sortie de l'arbre rotationnel (47).

6. Moteur selon au moins l'une des revendications 3 à 5, **caractérisé en ce qu'**une pluralité de fentes (83f) sont formées dans une paroi circonférentielle extérieure de l'embrayage extérieur de manière à passer à travers celle-ci jusqu'à un intérieur de l'embrayage extérieur (83), et dans lequel les fentes (83f) sont constituées pour s'ouvrir dans une direction dans laquelle l'huile de lubrification gicle.

7. Moteur selon au moins l'une des revendications 1 à 6, **caractérisé en ce que** le mécanisme d'embrayage (17) est disposé dans une chambre d'embrayage (38) séparée d'un carter (37) qui loge à l'intérieur de celle-ci la partie de connexion et les bras de manivelle (28a, 28b), et dans lequel une ouverture d'introduction (103) est fournie entre les deux chambres (37, 38) pour permettre à l'huile de lubrification qui gicle d'entrer dans la chambre d'embrayage (38).

8. Moteur selon la revendication 7, **caractérisé en ce que** l'ouverture d'introduction (103) est formée de manière à s'étendre entre des zones des deux côtés d'un plan (C) comprenant l'arbre rotationnel (47) et le vilebrequin (28).

9. Moteur selon au moins l'une des revendications 1 à 8, **caractérisé en ce qu'**il est fourni une partie de guidage (104) apte à recevoir l'huile de lubrification qui gicle et à guider plus d'huile de lubrification ainsi reçue vers un intérieur du mécanisme d'embrayage (17) que vers un extérieur de celui-ci.

10. Moteur selon la revendication 9, **caractérisé en ce que** la partie de guidage (104) comprend une partie de réception de lubrification (104a) disposée de manière à faire face à l'huile de lubrification qui gicle pour recevoir l'huile de lubrification qui gicle et une sous-partie de guidage (104b) qui s'étend de la partie de réception d'huile de lubrification (104a) jusqu'à un intérieur de l'embrayage extérieur (83) configurée pour guider l'huile de lubrification reçue par la partie de réception d'huile de lubrification (104a) vers l'intérieur de l'embrayage extérieur (83).

11. Moteur selon au moins l'une des revendications 1 à 9, **caractérisé en ce qu'**une poulie de côté d'entraînement (55) d'une transmission variable continuellement à courroie trapézoïdale sèche (16) est montée à une première extrémité du vilebrequin (28) et **en ce qu'**un trou d'alimentation d'huile s'étend d'une deuxième extrémité du vilebrequin (28) pour communiquer avec la partie de connexion pour fournir une alimentation d'huile de lubrification à la partie de connexion puis à une zone de giclement de lubrification.

12. Moteur selon au moins l'une des revendications 3 à 11, **caractérisé en ce qu'**un engrenage de sortie (75) est disposé à proximité de l'extrémité ouverte (83e) de l'embrayage extérieur (83) et **en ce que** l'extrémité ouverte (83e) et l'engrenage de sortie (75) sont situés à l'intérieur de la zone de giclement d'huile de lubrification.

13. Véhicule, en particulier une motocyclette, **caractérisé en ce qu'**il comprend un moteur selon au moins l'une des revendications 1 à 12.
